# EUROPEAN PATENT SPECIFICATION

(11) **EP 2 637 518 B1**
(45) Date of publication and mention of the grant of the patent: **26.04.2017**
(21) Application number: 11839081.4
(22) Date of filing: 07.10.2011
(51) Int. Cl.: A23L 27/40, A23L 19/18, A23P 20/10

(54) **SALTED FOOD PRODUCT**
GESALZENES NAHRUNGSMITTEL
PRODUIT ALIMENTAIRE SALÉ

(30) Priority: 10.11.2010 US 943632
(43) Date of publication of application: 18.09.2013
(73) Proprietor: Frito-Lay North America, Inc., Plano, TX 75024-4099 (US)
(72) Inventor: EHRHARDT, Gary, Plano TX 75023 (US); NIERMANN, Jason, Thomas, Frisco TX 75034 (US); RAO, V.N., Mohan, Plano TX 75093 (US); ZHU, Yi, Plano TX 75093 (US)
(74) Representative: Jenkins, Peter David
(86) International application number: PCT/US2011/055358
(87) International publication number: WO 2012/064439

(56) References cited:
- US-A1- 2008 003 344
- US-A1- 2009 297 631
- US-A1- 2010 028 496
- US-A1- 2010 112 185
- US-B2- 6 800 311

## Description

### BACKGROUND OF THE INVENTION

### Technical Field

The present invention is directed to a method of choosing a salt composition, a salted food product, and a method of salting a coated food product.

### Description of Related Art

Salt is a popular seasoning for food products. Salt typically comprises sodium chloride crystals, but can further comprise other mineral salts present as accidental or purposeful inclusions.

Although salt is a popular and effective seasoning, in recent years, consumers have expressed a preference for food products that have reduced levels of sodium. Research in the area of sodium reduction has focused primarily on two areas. First, some researchers have investigated reducing the size of salt particles applied to food. U.S. Patent Publication No 20080003339 alleges that using salt particle sizes less than 20 microns increases the perception of saltiness on the part of consumers, thereby allowing practitioners to reduce the overall level of salt applied to food products. The second area of research is directed to substituting compounds that do not contain sodium for sodium chloride in salt compositions. These substitute compounds attempt to mimic the taste of sodium chloride, but frequently suffer from off-flavors that can be detected by consumers.

US Patent publication No. 2010/0028496 discloses a composition for reducing the sodium chloride content in food products. The composition comprises one or more solid core particles suitable for consumption, one or more fatty oils which are suitable for consumption and salt which is suitable for consumption and comprises or consists of sodium chloride which adheres to the surface of the core particles.

A need still exists in the art for a way of reducing the amount of sodium chloride in salted food products without the consumer perceiving a meaningful loss in salt flavor, or otherwise adversely affecting the flavor of the salted food.

### SUMMARY OF THE INVENTION

The present invention is directed to a salted food product, a method of choosing a salt composition, and a method for salting a food product, as described in the claim. The food product has an outer surface at least partially coated with an oil layer having an average thickness. At least 95% by weight of the salt particles in the salt composition have a particle size greater than the average thickness of the oil layer. In this embodiment, substantially all of the salt particles protrude above the oil layer.

The salt composition is chosen by measuring the average thickness of an oil layer covering a food product, and selecting only those salt particles that would provide a salt composition wherein at least 95% by weight of the salt particles have a particle size larger than the average thickness of the oil layer. The salt composition is applied to a food product that is at least partially coated with oil.

In another embodiment, the salt composition comprises agglomerates of primary salt particles. In still another embodiment, the salt composition comprises a salt enhancer.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying figures, wherein:
Figure 1 depicts a graph showing the particle size distribution of the control salt as determined using a Malvern particle size analyzer;
Figure 2 is a cross-sectional view of a fried potato chip seasoned with the control salt;
Figure 3 is a cross-sectional view of a fried potato chip seasoned with the experimental salt of the present invention;

### DETAILED DESCRIPTION OF THE INVENTION

The present invention is thus directed to methods and salt compositions that can be used to provide a salted food product with reduced levels of sodium chloride, but without the consumer perceiving a meaningful loss in salty flavor. The inventors herein have determined that interactions between the salt particles and the consumer's mouth can be enhanced in ways that have not been recognized in the art.

The inventive method and composition are focused, in one embodiment, on topically seasoned food products that have an oil or lipid layer at least partially covering or coating an outer surface of the food product. The terms oil and lipid are used interchangeably herein.

In one embodiment the food product is a fried food product. When foods are dehydrated by frying in hot oil, the resulting food product can form a thin layer of oil on the outer surface. A preferred example of such a food product is a fried potato slice, or potato chip.

In another embodiment, the food product can be coated with a layer of oil at any time before being packaged or consumed. For example, a potato slice can be baked, and then lightly coated with oil to provide the consumer with a flavor and mouthfeel similar to a fried potato chip. Another example of such a food product is an extruded food product that can be baked after extrusion, and coated with oil for improved flavor and mouthfeel.

Regardless how the food product with an outer surface at least partially coated with an oil layer is formed, such food products are frequently seasoned by applying salt to the outer surface of the food product. Salt can be applied by passing the oil-coated food products under a curtain of seasoning, tumbling the food products with a salt composition in a seasoning tumbler, or by other methods known in the art. Salt adheres to the outer surface of the food product and dissolves in the mouth of the consumer when the food product is consumed.

Salt compositions currently available in the market can be purchased according to particle size distribution having a mean particle size. For example, a salt composition can be purchased that has a volume weighted mean particle size of 220 microns. However, when the particle size distribution of such a composition is analyzed in detail, it is seen that, for example, the particle sizes range from 10 microns to 600 microns, and the distribution of the particles follows an approximately Gaussian distribution, with fewer particles found near the endpoints of the particle size range, and more particles found near the middle of the range.

Applicants herein theorized that when the previously known salt compositions were used to topically season a food product with an oil layer at least partially covering the outer surface, a significant portion of the salt particles were completely submerged inside the oil layer because salt has a higher density than oil. Applicants further theorized that these submerged particles would not be immediately available to dissolve in the consumer's mouth when the salted food product was consumed, and therefore would not contribute to the initial saltiness perception when the food product is consumed. Also, some submerged particles may never interact with and dissolve in the consumer's mouth because they may remain fully enrobed in oil during the entire time the food product resides in the consumer's mouth. Applicants hypothesized that the thickness of the oil layer could be measured, and a salt composition could be chosen such that substantially all of the salt particles are large enough to protrude above the oil layer, and be immediately available to be perceived in the mouth of the consumer. Consequently, the amount of salt applied to a food product could be reduced without meaningfully changing the overall level of saltiness perceived by the consumer.

Applicants tested their hypothesis using fried potato chips. The details and results of those tests are outlined below. However, the mechanism of this sodium reduction strategy is clearly applicable to other food products that have an oil layer covering at least a portion of their outer surfaces.

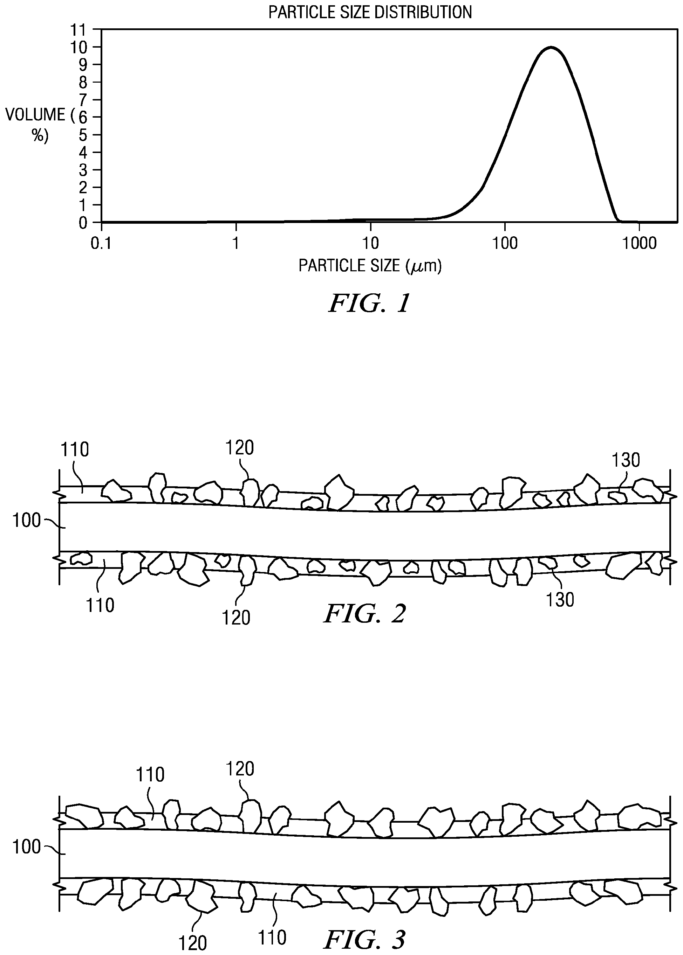

In one test, Applicants measured the particle size distribution of commercially available Alberger Shur-Flo fine flake salt, made by Cargill, Inc., having a mean particle size of about 220 microns (referred to herein as the "control salt"). The particle size distribution of the control salt was also analyzed using a Malvern particle size analyzer. In particular, the distribution was measured using Malvern Mastersizer 2000 with a Scirocco dry dispersion feed unit using 0.5 bar average pressure. A graph of particle size versus volume percent is presented in Figure 1. As can be seen, the particle size ranges from about 10 microns to 600 microns, and follows an approximately normal distribution curve, where the term "normal distribution" is used to describe a distribution that clusters around a mean value, with fewer particles found near the endpoints of the curve. The particle size distribution of the commercially available control salt, measured by weight percent, can be found in Table 1 below.

**Table 1: Sieve Analysis of Alberger Shur-Flo Fine Flake Salt**

| Particle Size Range (micron) | Weight Percent (%) |
|---|---|
| > 420 | 9 |
| < 420; > 300 | 17 |
| < 300; > 210 | 23 |
| < 210; > 150 | 21 |
| < 150 | 30 |

In another test, Applicants measured and calculated the thickness of the oil layer on the outer surfaces of a sample of fried potato chips. The results of these measurements are shown in Table 2 below.

**Table 2: Chip Oil Layer Thickness**

| Chip (#) | Average Oil Thickness (micron) |
|---|---|
| 1 | 60.0 |
| 2 | 70.5 |
| 3 | 69.8 |
| 4 | 90.3 |
| 5 | 83.8 |
| 6 | 75.3 |

The average oil thickness among these six sample potato chips was about 75 microns, with a standard deviation of about 10.8 microns. The average oil layer thickness for a particular potato chip (or any food product) can be determined by directly measuring the oil layer thickness at a number of locations on the food product (using, for example, a confocal laser scanning microscope, computed tomography (CT) scan, or other direct measurement device known in the art) and averaging the measurements. Alternatively, the average oil layer thickness can be determined empirically. A practitioner can measure the surface area of the potato chip and the weight of the oil on the potato chip, and, using the density of oil and assuming uniform coverage, calculate the average thickness of the oil layer on the chip. One skilled in the art, after reading the disclosure herein, will be readily able to determine the average oil layer thickness with routine experimentation.

After the average oil layer thickness for typical potato chips was determined, it was hypothesized that an experimental salt composition, which was designed to be used with potato chips prepared according to the same method and materials used for the potato chips analyzed in Table 2 above, could be prepared by removing from the control salt substantially all particles smaller than about 100 microns, thereby truncating the lower end of the control salt particle size distribution at about 100 microns. It was further hypothesized that when this truncated salt was applied to a potato chip at a level that was lower than the control salt, it would provide a saltiness perception that was similar to (or not statistically different from) the saltiness perception provided by the control salt applied at higher levels.

To test the hypothesis, the control salt was sieved such that more than 98% by weight of the salt particles would not pass through a #140 mesh screen, which meant that more than 98% of the salt particles were larger than about 105 microns. It will be understood by one skilled in the art, after reading the disclosure herein, that 100% compliance with the minimum specified particle size is likely commercially impractical for numerous reasons, including the lack of 100% efficiency in any separation or sieving step, the fracture of larger salt particles during handling but after the separation step, and other sources of error present in the separation, handling and measurement steps used in preparing, shipping and applying the salt to a food product. Also, free-flowing or anti-caking agents may be added to a salt composition (typically at less than 2% by weight of the composition), wherein the free flowing/anti-caking agents have particle sizes below 100 microns, without appreciably affecting the saltiness perception for the composition. Any cost-efficient quality control mechanism could still allow, in one embodiment, less than 5% by weight of the salt particles to be present at sizes below minimum specification (nonconforming) and still be effective. In preferred embodiment, the level of nonconforming salt is less than 2% by weight, and in a most preferred embodiment, less than 1% by weight.

In any case, substantially all of the salt particles should have a particle size that is greater than the average thickness of the oil layer. Table 3 below shows the particle size distribution for the salt composition having at least 98% by weight particle sizes greater than 105 microns (referred to herein as the "experimental salt"). A salt particle can be said to have a particle size greater than 105 microns when it will not pass through a mesh screen with openings sized at 105 microns.

**Table 3: Experimental Salt Particle Size Distribution**

| Particle Size Range (micron) | Weight Percent (%) |
|---|---|
| > 420 | 4.0 |
| < 420; > 300 | 17.5 |
| < 300; >210 | 27.6 |
| < 210; > 150 | 24.1 |
| < 150; > 105 | 26.6 |
| < 105 | 1.7 |

### COMPARATIVE EXAMPLES

In one test, a first sample of fried potato chips was seasoned at 1.0% by weight with the control salt, and a second sample of fried potato chips was seasoned at 1.0% by weight with the experimental salt. Both samples were evaluated for saltiness by an expert sensory panel, and the experimental salt was found to produce a higher overall saltiness perception than the control salt.

In a second test, an expert panel evaluated potato chip samples with the control salt applied at 1.5% by weight, control salt applied at 1.1% by weight, and experimental salt applied at 1.1% by weight. The expert panel ranked the control salt applied at 1.5% as the saltiest, the experimental salt applied at 1.1% as the second most salty, and the control salt applied at 1.1% as the least salty of the three samples. Furthermore, there was no statistical difference in saltiness perception between the control salt applied at 1.5% and the experimental salt applied at 1.1%, whereas there was a statistical difference between the control salt applied at 1.1% and the control salt applied at 1.5%.

In a third test, a comparison test was performed, wherein a non-expert panel was asked to compare a sample of commercially available potato chips (Brand 1) with one sample of potato chips seasoned with the control salt at 1.5% by weight, and another sample of potato chips seasoned with the experimental salt at 1.1% by weight (representing about a 25% reduction in sodium content from potato chips salted at 1.5%). When the control sample was compared to Brand 1 potato chips, the panel expressed a preference for the control sample, with 70% of the panel preferring the control sample and 30% of the panel preferring the Brand 1 sample. When the experimental sample was compared to Brand 1 potato chips, an identical preference for the experimental sample over the Brand 1 sample (70% to 30%) was found. Thus, there was no statistical difference in preference when the salt level was reduced by 25% from control. Similarly, there was no statistical difference in the panel's expressed preference, purchasing intent, or liking between the control and experimental samples versus the Brand 1 potato chips, and the saltiness perception was similar in each comparison.

In fourth and fifth tests, control and experimental samples, prepared as above, were compared to two other commercially available brands of salted potato chips (Brand 2 and Brand 3), respectively. As with the Brand 1 comparison test, there was no statistical difference found in the panel's assessment of preference, purchasing intent, or liking when the experimental salt was applied at a 25% reduction and compared with Brand 2 or Brand 3.

Applicants also examined potato chips seasoned with the control and experimental salts using a confocal laser microscope. Images from this analysis showed salt particles having a particle size above 100 microns (for example, 150 microns) protruding about 40 microns above the oil layer in the experimental sample, and in the control sample, salt particles having a particle size below about 100 microns (for example, 50 microns) could be seen submerged about 30 microns below the surface of the oil layer. It is believed that once salt particles have been submerged beneath the surface of the oil layer, they remain there during subsequent processing and handling of the food products until, perhaps, they become dislodged during the chewing process.

Figure 2 is a cross-sectional view of a fried potato chip 100 seasoned with the control salt. As can be seen therein, smaller salt particles 130 are fully submerged in the oil layer 110, whereas the larger salt particles 120 protrude above the surface of the oil layer 110. Figure 3 is a cross-sectional view of a fried potato chip 100 seasoned with the experimental salt. Substantially all of the salt particles 120 can be seen in Figure 3 protruding from the oil layer 110, thereby making them immediately available to dissolve in the mouth of the consumer. Furthermore, it is believed that as the protruding salt particles 120 dissolve above the oil layer surface, the space formerly occupied by the salt particle provides a pathway or tunnel that allows saliva to continue dissolving the salt particle below the surface of the oil layer, thereby allowing the consumer to continue perceiving the salty flavor.

Thus, Applicants have discovered a method of choosing a salt composition, a salted food product, and a method of salting a food product.

In one embodiment, a salt composition for application to a food product having at least a portion of an outer surface coated with an oil layer having an average thickness comprises a plurality of salt particles wherein substantially all of said salt particles comprise a particle size greater than said average thickness of said oil layer. In another embodiment, the salt composition consists essentially of salt particles having a particle size greater than said average thickness of said oil layer. The phrase "consisting essentially of" is meant to include only those salt compositions in which substantially all of the salt particles have a particle size greater than said average thickness of said oil layer. At least 95% of said salt particles comprise a particle size greater than said average thickness of said oil layer. In a preferred embodiment, at least 98% of said salt particles comprise a particle size greater than said average thickness of said oil layer.

The method of choosing a salt composition comprises measuring an average oil layer thickness on a food product, and selecting salt particles wherein at least 95% by weight of said salt particles have a particle size greater than said average oil layer thickness. In one embodiment, said selecting comprises removing from a first salt composition substantially all salt particles having a particle size that is less than said average oil layer thickness to produce a second salt composition. At least 95% of said salt particles comprise a particle size greater than said average thickness of said oil layer after said removing step. In another embodiment, at least 98% of said salt particles comprise a particle size greater than said average thickness of said oil layer after said removing step.

In another embodiment, a method of seasoning a food product comprises providing a food product having at least a portion of a surface coated with an oil layer having an average thickness, applying a salt composition comprising salt particles to said food product wherein at least 95% by weight of said salt particles have a particle size greater than said average oil layer thickness.

In another embodiment, a food product comprises at least a portion of an outer surface coated with an oil layer, wherein said oil layer has an average thickness, and a salt composition comprising salt particles, wherein at least 95% by weight of said salt particles have a particle size greater than said average thickness of said oil layer.

The present invention is a surprising improvement on the prior art because the amount of salt applied to a food product can be reduced by at least 25% with no meaningful difference in saltiness perception by the consumer. Moreover, the sodium reduction is accomplished without the inclusion of compounds other than sodium chloride in the salt composition. Therefore, this sodium reduction strategy can be coupled with other sodium reduction strategies to synergistically reduce the levels of sodium present in topically seasoned food products. For example, potassium chloride, calcium chloride, or magnesium chloride may be substituted for a portion of the sodium chloride in the inventive composition disclosed herein, but at a lower level than previously used in the art due to the increased saltiness perception enjoyed by the inventive composition described and claimed herein even absent such substitution. This may allow a practitioner to reduce or eliminate the perception of off-flavors usually associated with such salt enhancers. The present invention may be combined with any salt enhancer known in the art. Examples of salt enhancers that can be used with the present invention include food-grade acids, amino acids, physiologically acceptable salts other than sodium chloride (such as potassium chloride, calcium chloride, magnesium chloride, magnesium sulfate, calcium sulfate, and potassium sulfate) and carbohydrates.

Another sodium reduction technology that can be used in conjunction with the present invention is agglomeration of smaller, primary salt particles into aggregates or agglomerates, which are then topically applied to a food product. US publication No. 2011/0003037 discloses a method of forming primary salt particles, agglomerating said primary particles to form salt aggregates or agglomerates using pressure, heat or steam, and using the salt aggregates as topical food seasoning. The porous structure of the aggregates allows them to dissolve more quickly in the consumer's mouth, increasing the saltiness perception of a food seasoned with such aggregates. Thus, in the embodiments of the present invention disclosed above, at least a portion of the salt particles used in such embodiments comprise aggregates of primary particles, wherein substantially all of said aggregates comprise an aggregate particle size greater than said average thickness of said oil layer. As such the increased saltines of the aggregates can be combined with the increased saltiness perception of the inventive composition, thereby allowing even further reduction in salt content without any accompanying loss in saltiness perception.

While the invention has been particularly shown and described with reference to several preferred embodiments, it will be understood by those skilled in the art that various changes in form and detail may be made therein without departing from the scope of the invention.

## Claims

1. A method of choosing a salt composition comprising:
providing a food product having an outer surface at least partially coated with an oil layer having an average thickness;
measuring said average thickness of said oil layer;
selecting salt particles for said salt composition, wherein at least 95% by weight of said salt particles have a particle size greater than said average thickness of said oil layer.

2. The method of claim 1 wherein said selecting comprises removing from an initial salt composition salt particles having a particle size smaller than said average thickness of said oil layer; optionally wherein said removing comprises sieving.

3. The method of claim 1 wherein said measuring comprises direct measurement of said oil layer.

4. The method of claim 1 wherein said measuring comprises calculating said average thickness based on measurements of said outer surface and volume of said oil layer.

5. The method of claim 1 wherein at least 98% by weight of said salt particles have a particle size greater than said average thickness of said oil layer.

6. The method of claim 1 wherein said salt particles comprise agglomerates of primary salt particles.

7. A food product comprising:
an outer surface at least partially coated with an oil layer having an average thickness;
a salt composition comprising salt particles on said oil layer, wherein at least 95% by weight of said salt particles have a particle size greater than said average thickness of said oil layer.

8. The food product of claim 7 wherein said salt composition further comprises at least one salt enhancer chosen from the group consisting of food-grade acids, amino acids, physiologically acceptable salts other than sodium chloride and carbohydrates.

9. A method of salting a food product comprising:
providing a food product having an outer surface at least partially coated with an oil layer having an average thickness;
applying a salt composition to said food product, wherein said salt composition comprises salt particles and at least 95% by weight of said salt particles have a particle size greater than said average thickness of said oil layer.

10. The food product of claim 7 or the method of claim 9 wherein at least 98% by weight of said salt particles have a particle size greater than said average thickness of said oil layer.

11. The method of claim 9 wherein said salt composition further comprises at least one salt enhancer chosen from the group consisting of food-grade acids, amino acids, physiologically acceptable salts other than sodium chloride and carbohydrates.

12. The food product of claim 7 or the method of claim 9 wherein said salt particles comprise agglomerates of primary salt particles.

13. The method of claim 9 further comprising:
measuring said average thickness of said oil layer;
selecting said salt particles for said salt composition based on said average thickness.

## Patentansprüche

1. Verfahren zum Wählen einer Salzzusammensetzung, wobei das Verfahren Folgendes umfasst:
Bereitstellen eines Lebensmittelprodukts mit einer Außenfläche, die zumindest zum Teil mit einer Ölschicht mit einer durchschnittlichen Dicke überzogen ist;
Messen der durchschnittlichen Dicke der Ölschicht;
Auswählen von Salzteilchen für die Salzzusammensetzung, wobei mindestens 95 Gew.-% der Salzteilchen eine Teilchengröße aufweist, die größer als die durchschnittliche Dicke der Ölschicht ist.

2. Verfahren nach Anspruch 1, wobei das Auswählen das Entfernen von Salzteilchen einer anfänglichen Salzzusammensetzung umfasst, die eine Teilchengröße aufweisen, die kleiner als die durchschnittliche Dicke der Ölschicht ist; gegebenenfalls wobei das Entfernen Sieben umfasst.

3. Verfahren nach Anspruch 1, wobei das Messen eine direkte Messung der Ölschicht umfasst.

4. Verfahren nach Anspruch 1, wobei das Messen das Berechnen der durchschnittlichen Dicke auf der Basis von Messungen der Außenfläche und des Volumens der Ölschicht umfasst.

5. Verfahren nach Anspruch 1, wobei mindestens 98 Gew.-% der Salzteilchen eine Teilchengröße aufweist, die größer als die durchschnittliche Dicke der Ölschicht ist.

6. Verfahren nach Anspruch 1, wobei die Salzteilchen Agglomerate von primären Salzteilchen umfassen.

7. Lebensmittelprodukt, das Folgendes umfasst:
eine Außenfläche, die zumindest zum Teil mit einer Ölschicht mit einer durchschnittlichen Dicke überzogen ist;
eine Salzzusammensetzung, die Salzteilchen umfasst, auf der Ölschicht, wobei mindestens 95 Gew.-% der Salzteilchen eine Teilchengröße aufweist, die größer als die durchschnittliche Dicke der Ölschicht ist.

8. Lebensmittelprodukt nach Anspruch 7, wobei die Salzzusammensetzung weiterhin mindestens einen Salzverstärker umfasst, der aus der Gruppe bestehend aus Säuren in Lebensmittelqualität, Aminosäuren, physiologisch akzeptablen Salzen, bei denen es sich nicht um Natriumchlorid handelt, und Kohlenhydraten ausgewählt ist.

9. Verfahren zum Salzen eines Lebensmittelprodukts, wobei das Verfahren Folgendes umfasst:
Bereitstellen eines Lebensmittelprodukts mit einer Außenfläche, die zumindest zum Teil mit einer Ölschicht mit einer durchschnittlichen Dicke überzogen ist;
Aufbringen einer Salzzusammensetzung auf das Lebensmittelprodukt, wobei die Salzzusammensetzung Salzteilchen umfasst und mindestens 95 Gew.-% der Salzteilchen eine Teilchengröße aufweist, die größer als die durchschnittliche Dicke der Ölschicht ist.

10. Lebensmittelprodukt nach Anspruch 7 oder Verfahren nach Anspruch 9, wobei mindestens 98 Gew.-% der Salzteilchen eine Teilchengröße aufweist, die größer als die durchschnittliche Dicke der Ölschicht ist.

11. Verfahren nach Anspruch 9, wobei die Salzzusammensetzung weiterhin mindestens einen Salzverstärker umfasst, der aus der Gruppe bestehend aus Säuren in Lebensmittelqualität, Aminosäuren, physiologisch akzeptablen Salzen, bei denen es sich nicht um Natriumchlorid handelt, und Kohlenhydraten ausgewählt ist.

12. Lebensmittelprodukt nach Anspruch 7 oder Verfahren nach Anspruch 9, wobei die Salzteilchen Agglomerate von primären Salzteilchen umfassen.

13. Verfahren nach Anspruch 9, das weiterhin Folgendes umfasst:
Messen der durchschnittlichen Dicke der Ölschicht;
Auswählen der Salzteilchen für die Salzzusammensetzung auf der Basis der durchschnittlichen Dicke.

## Revendications

1. Procédé permettant de choisir une composition de sel comportant les étapes consistant à :
mettre en oeuvre un produit alimentaire ayant une surface extérieure recouverte au moins partiellement d'une couche d'huile ayant une épaisseur moyenne ;
mesurer ladite épaisseur moyenne de ladite couche d'huile ;
sélectionner des particules de sel pour ladite composition de sel, dans lequel au moins 95 % en poids desdites particules de sel ont une dimension des particules supérieure à ladite épaisseur moyenne de ladite couche d'huile.

2. Procédé selon la revendication 1, dans lequel ladite étape consistant à sélectionner comporte l'étape consistant à retirer en provenance d'une composition de sel initiale des particules de sel ayant une dimension des particules inférieure à ladite épaisseur moyenne de ladite couche d'huile ; éventuellement dans lequel ladite étape consistant à retirer comporte l'étape consistant à tamiser.

3. Procédé selon la revendication 1, dans lequel ladite étape consistant à mesurer comporte une mesure directe de ladite couche d'huile.

4. Procédé selon la revendication 1, dans lequel ladite étape consistant à mesurer comporte l'étape consistant à calculer ladite épaisseur moyenne en fonction des mesures de ladite surface extérieure et du volume de ladite couche d'huile.

5. Procédé selon la revendication 1, dans lequel au moins 98 % en poids desdites particules de sel ont une dimension des particules supérieure à ladite épaisseur moyenne de ladite couche d'huile.

6. Procédé selon la revendication 1, dans lequel lesdites particules de sel comportent des agglomérats de particules de sel primaires.

7. Produit alimentaire comportant :
une surface extérieure recouverte au moins partiellement d'une couche d'huile ayant une épaisseur moyenne ;
une composition de sel comportant des particules de sel sur ladite couche d'huile, dans lequel au moins 95 % en poids desdites particules de sel ont une dimension des particules supérieure à ladite épaisseur moyenne de ladite couche d'huile.

8. Produit alimentaire selon la revendication 7, dans lequel ladite composition de sel comporte par ailleurs au moins un exhausteur de sel choisi dans le groupe constitué par des acides de qualité alimentaire, des acides aminés, des sels physiologiquement acceptables autre que du chlorure de sodium et des glucides.

9. Procédé permettant de saler un produit alimentaire comportant les étapes consistant à :
mettre en oeuvre un produit alimentaire ayant une surface extérieure recouverte au moins partiellement d'une couche d'huile ayant une épaisseur moyenne ;
appliquer une composition de sel sur ledit produit alimentaire, dans lequel ladite composition de sel comporte des particules de sel et au moins 95 % en poids desdites particules de sel ont une dimension des particules supérieure à ladite épaisseur moyenne de ladite couche d'huile.

10. Produit alimentaire selon la revendication 7 ou procédé selon la revendication 9, dans lesquels au moins 98 % en poids desdites particules de sel ont une dimension des particules supérieure à ladite épaisseur moyenne de ladite couche d'huile.

11. Procédé selon la revendication 9, dans lequel ladite composition de sel comporte par ailleurs au moins un exhausteur de sel choisi dans le groupe constitué par des acides de qualité alimentaire, des acides aminés, des sels physiologiquement acceptables autre que du chlorure de sodium et des glucides.

12. Produit alimentaire selon la revendication 7 ou procédé selon la revendication 9, dans lesquels lesdites particules de sel comportent des agglomérats de particules de sel primaires.

13. Procédé selon la revendication 9, comportant par ailleurs les étapes consistant à :
mesurer ladite épaisseur moyenne de ladite couche d'huile ;
sélectionner lesdites particules de sel pour ladite composition de sel en fonction de ladite épaisseur moyenne.
